# EUROPEAN PATENT APPLICATION

(11) **EP 4 664 566 A1**
(43) Date of publication of application: **17.12.2025**
(21) Application number: 24771260.7
(22) Date of filing: 14.03.2024
(51) Int. Cl.: H01M 4/66, H01M 4/36, H01M 4/62, H01M 4/02

(54) **NEGATIVE ELECTRODE FOR LITHIUM METAL BATTERY**

(30) Priority: 14.03.2023 KR 20230033400
(71) Applicant: SK On Co., Ltd., Seoul 03161 (KR)
(72) Inventor: CHOI, Bit-Na, Daejeon 34124 (KR); LEE, Jae-Woo, Daejeon 34124 (KR)
(74) Representative: Prüfer & Partner mbB Patentanwälte · Rechtsanwälte
(86) International application number: PCT/KR2024/095537
(87) International publication number: WO 2024/191261

(57) **Abstract**

The present disclosure, which relates to a negative electrode for a lithium metal battery, provides a negative electrode comprising a substrate and a porous layer on the substrate wherein the porous layer includes a plurality of metal powders and a plurality of pores, the metal powders having a core part and a shell part coated on at least a portion of the surface of the core part.

## Description

### Technical Field

The present disclosure relates to a negative electrode for a lithium metal battery.

### Background Art

Lithium is not only the lightest metal, but also possesses a low reduction potential (-3.04V vs. SHE) and a high theoretical capacity (3860 mAh/g), and therefore, lithium metal batteries using lithium metal itself as the negative electrode active material are being developed.

Lithium secondary batteries using lithium metal as the electrode require thin lithium metal electrodes to maximize battery efficiency and energy density. However, lithium foils of the related art are manufactured using physical rolling methods, but such rolling methods have limitations in producing lithium foils with a thickness below a certain level.

Recently, research into anode-free batteries has also been actively underway. Anode-free batteries utilize a negative electrode that does not contain the lithium metal negative electrode active material (layer). During charging, lithium ions are reduced, leading to the electrodeposition of lithium on the surface of the negative electrode current collector, thereby forming a lithium metal plating film.

However, the lithium layer formed on the negative electrode current collector has a low electrodeposition density, leading to severe side reactions with the electrolyte, which rapidly degrades battery lifespan. Furthermore, the negative electrode of an anode-free battery presents numerous problems that need to be solved in terms of battery performance and stability, such as problems of uneven lithium electrodeposition and dendrite growth during charging, and significant electrode volume changes during charging and discharging.

Meanwhile, various methods are being attempted to increase the uniformity of lithium electrodeposition and thus increase electrodeposition efficiency, and to suppress the growth of dendrites, such as coating the surface of the negative electrode current collector of the above-mentioned plate-like body with a lithiophilic metal having an affinity for lithium, such as silver (Ag), a carbon material such as carbon black or the like, or a mixture of a lithiophilic metal such as silver as above and a carbon material, or using a three-dimensional structure, or the like.

However, the coating layer formed thereby suffers from limitations such as high resistance or low charge/discharge efficiency, and is evaluated to have low economic feasibility and practical applicability.

### Disclosure of Invention

### Technical Problem

An aspect of the present disclosure is to provide a negative electrode for a lithium metal battery in which the growth of lithium dendrites may be suppressed by inducing uniform lithium deposition.

In addition, an aspect of the present disclosure is to provide a negative electrode in which battery stability may be enhanced by suppressing electrode volume changes during charging and discharging.

In addition, an aspect of the present disclosure is to improve electrochemical characteristics of a lithium metal battery by using the negative electrode described above.

### Solution to Problem

According to an aspect of the present disclosure, a negative electrode for a lithium metal battery is provided, and the negative electrode includes a substrate and a porous layer on the substrate, wherein the porous layer includes a plurality of metal powder particles and a plurality of pores, and the metal powder particles have a core part and a shell part formed on at least a portion of a surface of the core part.

The shell part may include at least one lithiophilic metal selected from the group consisting of Si, Zn, Ti, Au, Ag, Pt, Mg, Sn, In, and Bi.

The shell part may be 1 nm to 1 µm.

The metal powder particles may have an aspect ratio of greater than 1 and less than or equal to 100.

The metal powder particles may have a major axis length of 1 to 100 µm.

The metal powder particles may be rod-shaped particles having at least one inflection point at which a direction of extension from one end to the other end changes.

The metal powder particles may have a bending angle β of 5° or more and 90° or less, changing in the direction of extension at the inflection point.

The metal powder particles may include at least one through-hole internally, wherein the through-hole may have at least one end open to the outside.

The metal powder particles may have two or more branches.

The metal powder particles may have a main branch and at least one side branch connected to the main branch.

The metal powder particles may include a core part of a first metal and a shell part of a second metal, wherein the first metal may have a higher reducing power than the second metal.

The first metal may include at least one metal selected from the group consisting of Cu, Si, Ge, Zn, Ti, Au, Ag, Pt, Mg, Sn, Al, In, Pb, Bi, Sb, Ni, Mn, Fe, Co, Cr, W, and Ru, an oxide of the metal, or an alloy of the metal.

The second metal may include at least one metal selected from the group consisting of Si, Zn, Ti, Au, Ag, Pt, Mg, Sn, In, and Bi, an oxide of the metal, or an alloy of the metal.

The porous layer may have a porosity of 30% or more and 95% or less, determined by XRM analysis.

The porous layer may have a closed porosity of 0.05% or less.

The porous layer may have a thickness of 0.5 to 100 µm.

The porous layer may further include a binder.

The binder may be a fluorine-containing binder.

The binder may include at least one selected from the group consisting of polyvinylidene fluoride (PVdF), polytetrafluoroethylene (PTFE), polytetrafluoroethylene, and fluororubber.

In any one of the above embodiments, the porous layer may include a first layer on a substrate surface side and a second layer that is an outer surface side of the porous layer, and a metal powder in the first layer may have a smaller particle size than a metal powder in the second layer.

In any one of the above embodiments, lithium metal may be electrodeposited within pores of the porous layer.

The substrate may be a current collector.

### Advantageous Effects of Invention

According to an aspect of the present disclosure, a negative electrode for a lithium metal battery may store lithium metal within the pores of a porous layer formed on the surface of a substrate, thereby enhancing electrochemical characteristics by increasing a contact surface area between the lithium metal and a current collector.

In addition, a negative electrode for a lithium metal battery according to the present disclosure has a high specific surface area, which may reduce a local current density of the negative electrode, thereby providing a uniform electron distribution within the lithium electrode.

In addition, a negative electrode for a lithium metal battery according to the present disclosure may prevent lithium dendrite formation and growth during charging and discharging, thereby improving battery stability.

Furthermore, a negative electrode for a lithium metal battery according to the present disclosure may provide sufficient space for lithium deposition during charging and discharging, thereby suppressing volumetric expansion of the battery.

### Brief Description of Drawings

FIG. 1 is a diagram conceptually illustrating cross-sections of an anode-free battery in charging and discharging states, wherein (a) illustrates a cross-section of a negative electrode in a discharged state, and (b) illustrates a cross-section of a negative electrode in a charged state.
FIG. 2 is a schematic diagram illustrating examples of rod-shaped metal powder particles according to the present disclosure.
FIG. 3 is a schematic diagram illustrating an example of a rod-shaped metal powder particle having at least one inflection point.
FIG. 4 is a schematic diagram illustrating an example of a metal powder particle having two or more branches.
FIG. 5 is a diagram illustrating a cross-section of a metal powder particle having a through-hole by way of example.
FIG. 6 is a schematic diagram illustrating cross-sections of a negative electrode in discharged and charged states, with a porous layer formed by metal powder on the surface of a negative electrode current collector, wherein (a) illustrates a negative electrode in a discharged state, and (b) illustrates a negative electrode in a charged state.
FIG. 7 provides respective images of metal powder particles used in the negative electrodes of Examples 1 to 4.
FIG. 8 is an image of a cross-section of the negative electrode in a charged state of Example 1 and an image of an enlarged portion thereof.
FIG. 9 is an image showing the internal pore structure of the porous layer of the negative electrode in a discharged state of Example 1.
FIG. 10 is an image of a cross-section of the negative electrode in a charged state of Example 1 and an image of an enlarged portion thereof.
FIG. 11 provides images of cross-sections of the negative electrodes in a charged state of Comparative Examples 1 and 2, wherein (a) is the negative electrode of Comparative Example 1 and (b) is the negative electrode of Comparative Example 2.
FIG. 12 is a graph showing the change in specific capacity with respect to the number of cycles for batteries using the negative electrodes of Example 1, Comparative Examples 1, and Comparative Example 3.
FIG. 13 is a graph showing the change in specific capacity with respect to the number of cycles for batteries using the negative electrodes of Examples 2 to 4.

### Best Mode for the Invention

The present disclosure relates to a negative electrode for a lithium metal battery, and in more detail, provides a negative electrode including a porous layer of metal powder on the surface of a substrate.

In this specification, a lithium metal battery refers to a battery using lithium metal as the negative electrode active material. Thereamong, a battery that does not preemptively incorporate lithium metal into the negative electrode current collector is referred to as an anode-free battery.

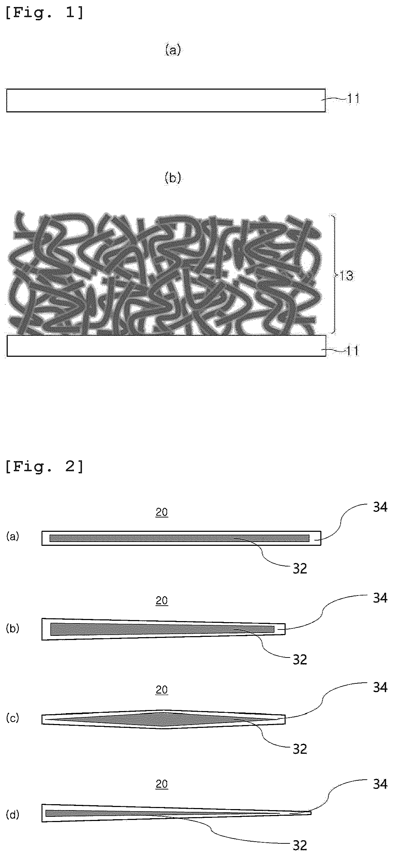

The cross-section of the negative electrode of such an anode-free battery and the cross-section of the negative electrode during charging are schematically illustrated in FIG. 1. (a) of FIG. 1 illustrates a cross-section of a negative electrode (10) of the anode-free battery, and (b) illustrates a cross-section of the charged negative electrode (10'). As illustrated in (a) of FIG. 1, a plate-like body of a conductive metal such as copper or the like is used as the substrate, for example, a negative electrode current collector (11). During the charging process, lithium metal is electrodeposited on the negative electrode current collector (11), forming a lithium layer (13), as illustrated in (b) of FIG. 1. The negative electrode of such an anode-free battery suffers from uneven electron density due to uneven deposition of a lithium layer on the negative electrode current collector, which may lead to the formation of lithium dendrites.

The present disclosure provides a negative electrode for a lithium metal negative electrode, and in detail, a negative electrode applicable to an anode-free battery. The negative electrode includes a substrate and a porous layer on the substrate. The porous layer includes a plurality of metal powder particles and a plurality of pores. The metal powder particles may have a core part and a shell part formed on at least a portion of the surface of the core part. Hereinafter, the porous layer is also referred to as a porous storage layer or a porous coating layer.

Hereinafter, the negative electrode of the present disclosure will be described in more detail.

The negative electrode in an embodiment of the present disclosure includes a substrate and a high-surface-area porous layer on the substrate. The porous layer may be formed directly on the substrate, or another layer may be further included between the porous layer and the substrate.

The substrate may function as a current collector, in detail, a negative electrode current collector, and may be suitably used as the substrate if it may be commonly used as a negative electrode current collector. For example, the substrate may be used without particular limitation as long as it is conductive and does not cause chemical change during operation of the battery, and may be a metal such as copper, stainless steel, aluminum, nickel, titanium or the like, or an alloy containing at least one of the above metals, such as an aluminum-cadmium alloy or the like, calcined carbon, or the like. A substrate having a surface treated with carbon, nickel, titanium, silver, or the like on the surface of a metal such as copper, stainless steel or the like may be used as the negative electrode current collector. Furthermore, a polymer coated with a conductive metal or a conductive polymer may also be used as the substrate of the present disclosure.

Furthermore, the substrate may be in various forms, such as a film, sheet, foil, net, porous body, foam, non-woven fabric and the like.

The thickness of the substrate is not particularly limited and may range, for example, from 1 to 100 µm. In more detail, the substrate may range from 3 to 50 µm or from 4 to 30 µm, and in more detail, from 4 to 12 µm.

As described above, the negative electrode of the present disclosure includes a porous layer on the surface of the substrate, for example, on one surface or both surfaces of the substrate. The porous layer may be formed using a metal powder particle, and the metal powder particle may core-shell structure including a core part and the core part.

The core part provides and maintains the shape of the metal powder particle of the present disclosure, and a shell part capable of inducing lithium electrodeposition on the surface of the core part may be formed.

The core part may be formed of any material capable of maintaining the shape of the metal powder particle as described above and forming a shell part on the surface thereof, and for example, the core part may be formed of metal.

The metal forming the core part may include at least one metal selected from the group consisting of, for example, Cu, Si, Ge, Zn, Ti, Au, Ag, Pt, Mg, Sn, Al, In, Pb, Bi, Sb, Ni, Mn, Fe, Co, Cr, W, and Ru, an alloy of the metal, or an oxide of any one of the metals.

In an embodiment, the core part may include a lithiophilic metal selected from the group consisting of Si, Zn, Ti, Au, Ag, Pt, Mg, Sn, In, and Bi, an alloy of the lithiophilic metal, or an oxide of any one of the metals. Since the core part includes a lithiophilic metal, even if a shell part is partially formed on the core part, the core part may contribute to lithium electrodeposition.

The metal powder particle of the present disclosure includes a shell part on the surface of the core part. The shell part may include a component capable of electrodepositing lithium during the battery charging process, for example, a metal.

The metal component included in the shell part is not particularly limited as long as it allows lithium to be electrodeposited, but the shell part may include a lithiophilic metal. By including the lithiophilic metal in the metal powder particle, lithium may be uniformly electrodeposited not only on the substrate serving as the negative electrode current collector but also within the porous layer formed by the metal powder particle, thereby increasing the lithium electrodeposition density. This may suppress the formation and growth of lithium dendrites at the negative electrode, thereby further extending the battery lifespan characteristics.

The lithiophilic metal included in the shell part may include, but is not limited to, at least one metal selected from the group consisting of Si, Zn, Ti, Au, Ag, Pt, Mg, Sn, In, and Bi, or include an oxide of these metals or an alloy of these metals. At this time, the lithiophilic metal constituting the shell part may be different from the metal constituting the core part.

The shell part may be formed of the lithiophilic metal described above, and may also include other metals other than the lithiophilic metal, and may be an alloy of the lithiophilic metal and the other metal.

The shell part may have a thickness of, but is not particularly limited to, 1 nm to 1 µm, and for example, the thickness may be 1 nm or more, 2 nm or more, 3 nm or more, 5 nm or more, 7 nm or more, 10 nm or more, 15 nm or more, or 20 nm or more, and may be 1 µm or less, 0.9 µm or less, 0.8 µm or less, 0.7 µm or less, or 0.5 µm or less.

The metal powder particle having a core-shell structure of the present disclosure includes a thin shell part formed on the surface of a core part. The shell part may be formed on the entirety of the core part or on a portion of the core part, and the thickness may be uniform or non-uniform, without particular limitations.

In the metal powder particle of the present disclosure, the core part provides and maintains the shape of the metal powder particle, and the shell part is provided on the core part. This shape may vary depending on the thickness of the shell portion, but the overall shape of the metal powder particle may be determined by the shape of the core part.

The shape of the metal powder particle is not particularly limited, but may be particles having an aspect ratio exceeding 1, or may have an aspect ratio greater than 1 and 100 or less. For example, the metal powder may be formed of a particle having an aspect ratio of greater than 1, 2 or more, 3 or more, 4 or more, 5 or more, 6 or more, or 7 or more, and 100 or less, 90 or less, 80 or less, 70 or less, 60 or less, 50 or less, 40 or less, 30 or less, 20 or less, or 10 or less. In this way, by having a particle shape with an aspect ratio exceeding 1 and being elongated in one direction, a porous layer with developed pores may be provided on the negative electrode current collector of the present disclosure.

The metal powder particle is not particularly limited, but may have, for example, a major axis length of 1 to 100 µm. The metal powder particle may be, for example, a rod-shaped particle. Some examples of rod-shaped particles are illustrated in FIG. 2 by way of example.

As illustrated in (a) of FIG. 2, the rod-shaped metal powder particle (20) has a linear outer shape and includes a core part (32) and a shell part (34) outside the core part. The cross-sectional diameter and shape of the rod-shaped metal powder particle may be constant.

The cross-sectional diameter of the rod-shaped metal powder particle may vary. For example, as illustrated in (b) of FIG. 2, the rod-shaped metal powder particle (20) including the core part (32) and the shell part (34) may have a cross-sectional diameter that decreases or increases regularly or irregularly in one direction. As a detailed example, the rod-shaped metal powder particle (20) may have a needle shape, as illustrated in (c) of FIG. 2. Also as illustrated in (d) of FIG. 2, the cross-sectional diameter of the rod-shaped metal powder particle (20) may decrease regularly or irregularly in both directions. Alternatively, although not illustrated in the drawing, the cross-sectional diameter may increase regularly or irregularly in both directions.

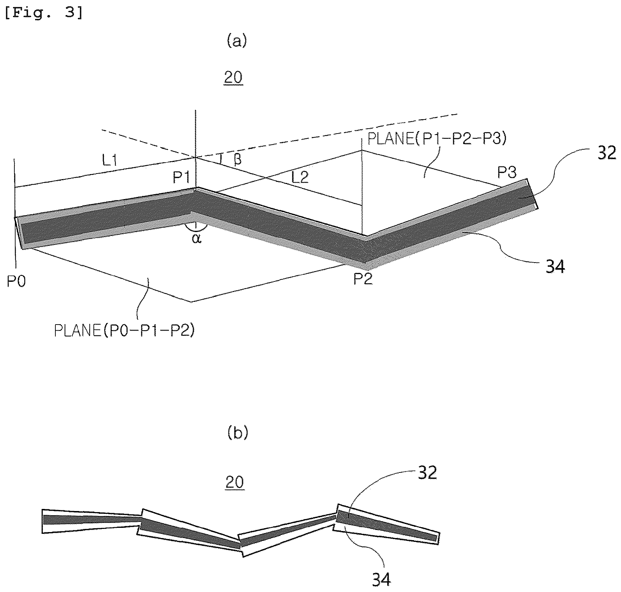

As another embodiment, the rod-shaped metal powder particle may include at least one inflection point where the direction of extension from one end to the other end changes. The rod-shaped metal powder particle having the inflection point is described with reference to FIG. 3.

As illustrated in (a) of FIG. 3, the rod-shaped metal powder particle (20) includes a core part (32) and a shell part (32), and may have at least one inflection point (P) at which the direction of extension thereof from one end to the other changes at least once while the diameter or shape of the cross-section of the metal powder particle is uniform. Furthermore, as illustrated in (b) of FIG. 3, the metal powder particle having the core-shell structure may have at least one inflection point while varying the cross-sectional diameter and/or shape.

As illustrated in (a) of F 3, when one end of the rod-shaped metal powder particle is P₀ and the other end is Pₙ (where n is a natural number of 2 or more), the rod-shaped metal powder particle may include at least one inflection point (P) at which the direction of extension changes from P₀ toward Pₙ. Since the rod-shaped metal powder particle has at least one inflection point, when forming a coating layer on a substrate, more pores may be formed between the metal powder particles, the number of pores within the coating layer may be increased, and finer pores may be formed.

In the rod-shaped metal powder particle, when the inflection points are P₀, P₁, P₂, P₃ ... Pₙ in order, including both ends, the distance between one inflection point and the adjacent inflection points, for example, the distance (L₁) between P₀ and P₁, the distance (L₂) between P₁ and P₂, or the distance (Lₙ) between Pₙ₋₁ and Pₙ, may be the same or different.

As described above, the direction of extension of the rod-shaped metal powder particle may change from one end to the other based on an adjacent inflection point. At this time, the direction of extension may change by a predetermined angle. In detail, the direction of extension may change by 90° or an acute angle less than 90°, the angle (bending angle) formed by two straight lines including each line segment, between two adjacent line segments based on one inflection point.

For example, as illustrated in (a) of FIG. 3, a rod-shaped metal powder particle including a line segment extending from P₀ to P₁ may include a line segment extending in a direction including a line segment from P₁ to P₂ with the direction of extension changed by the bending angle at the inflection point of P₁. In this case, the bending angle formed by the line segments P₀- P₁ and P₁- P₂ may be expressed as β.

On the other hand, although not illustrated in the drawing, a case in which the direction of extension changes to a curved shape may also be considered to include at least one inflection point of the present disclosure. Therefore, the rod-shaped metal powder particle of the present disclosure may be a straight-shaped rod-shaped metal powder particle or a curved rod-shaped metal powder particle.

The bending angle β included in the rod-shaped metal powder particle may be, but is not limited to, 5° or more and 90° or less, and in more detail, 5° or more, 10° or more, 15° or more, 20° or more, 25° or more, or 30° or more, and may be 90° or less, 85° or less, 80° or less, or 75° or less.

In another embodiment, in a rod-shaped metal powder particle, one virtual plane including two line segments adjacent to each other and sharing a single inflection point, and an included angle between the two line segments, and another virtual plane adjacent to the one virtual plane, may be parallel to each other or may not be parallel to each other.

For example, as illustrated in (a) of FIG. 3, in the rod-shaped metal powder particle (20), the virtual plane P₀-P₁-P₂, including the line segments P₀- P₁ and P₁-P₂, which share an inflection point P₁ and are adjacent to each other, and the included angle α between the two line segments, and the virtual plane P₁-P₂-P₃ adjacent to the virtual plane P₀-P₁-P₂, may not be parallel to each other, and although not illustrated, the two planes may be parallel to each other.

In another embodiment, the metal powder particle may have two or more branches. For example, it may be a branched metal powder particle including one main branch and at least one side branch connected to the main branch. For example, the main branch (22) may be a rod-shaped metal powder particle as illustrated in (a) to (d) of FIG. 2, or a rod-shaped metal powder particle having an inflection point as illustrated in (a) or (b) of FIG. 3, and at least one side branch (24) may be formed on the main branch. In this case, the side branch may also be a rod-shaped metal powder particle as described above.

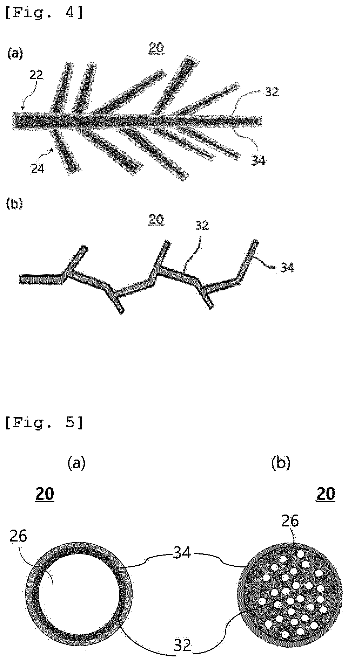

In more detail, the rod-shaped metal powder particle may be a dendritic metal powder particle having at least one side branch (24) on one main branch (22), as illustrated in (a) to (b) of FIG. 4.

The metal powder particle may include at least one through-hole (26) internally, as illustrated in (a) and (b) of FIG. 5. The at least one through-hole may be formed in the main branch of the metal powder particle or in a side branch. At least one of the through-holes may be open and connected to the outside. The opening location of the through-hole is not particularly limited and may be, for example, the end of the main branch and/or side branch.

As illustrated in FIG. 5, the diameter of the through-hole may vary and is not particularly limited.

The metal powder particle may be manufactured by forming a core part with a predetermined shape through a spontaneous substitution reaction and forming a shell part on the core part, thereby producing a metal powder particle with a core-shell structure.

The core part may be manufactured into a predetermined shape through a spontaneous substitution reaction of the metal. In detail, the core part may be manufactured using a spontaneous substitution reaction utilizing the difference in reducing power between different metals and a reaction activation process using hydrogen bubbles generated in an electrolyte containing chloride ions. This method allows for the manufacturing of a core part with a high specific surface area in a short period of time through a simple process.

In detail, the metal powder particle includes a core part formed of a first metal and a shell part formed of a second metal, and the first metal may have a higher reducing power than that of the second metal.

For example, when a metal (hereinafter, referred to as a sacrificial metal) with a higher reducing power than the first metal is immersed in a first electrolyte containing ions of the first metal, the ions of the first metal with a lower reducing power may receive electrons from the sacrificial metal and spontaneously undergo a substitution reaction to produce powder of the first metal, thereby producing metal particles that may serve as the core part.

The sacrificial metal may be selected in consideration of the type of the first metal and reducing power of the first metal, and the sacrificial metal is not particularly limited.

In addition, the spontaneous substitution reaction is well-established theoretically, and the conditions for performing the spontaneous substitution reaction may be easily selected, which will not be described in detail here. For example, the reaction rate of the spontaneous substitution reaction may be controlled by adjusting the ion concentration of the first metal in the first electrolyte.

The first metal may be, but is not limited to, at least one metal selected from the group consisting of Cu, Si, Ge, Zn, Ti, Au, Ag, Pt, Mg, Sn, Al, In, Pb, Bi, Sb, Ni, Mn, Fe, Co, Cr, W, and Ru, or an oxide of the metal, or an alloy of the metal.

The second metal may be, but is not limited to, at least one metal selected from the group consisting of Si, Zn, Ti, Au, Ag, Pt, Mg, Sn, In, and Bi, or an oxide of the metal, or an alloy of the metal.

The electrolyte may include an accelerator containing chloride ions or sulfide ions, and to this end, the electrolyte may be used by dissociating metal ions from metal sulfides, metal chlorides and the like containing the first metal.

The shell part may also be formed on the manufactured core part by a spontaneous substitution reaction.

In detail, the core part particles of the first metal are supported in a second electrolyte containing ions of a second metal with a lower reducing power than the first metal of the manufactured core part particles, and a spontaneous substitution reaction is performed, coating the surface of the core part particles of the first metal with the second metal to form a shell part, thereby obtaining a metal powder particle having a core-shell structure.

The second electrolyte is an electrolyte containing ions of the second metal forming the shell part, and may be a salt of an inorganic acid of the metal. The inorganic acid salt may be, but is not limited to, at least one electrolyte selected from the group consisting of nitrates, hydrochlorides, sulfates, and hydrofluoric acid salts.

In the spontaneous substitution reaction step of forming the shell part, chloride ions may be included as an accelerator for the spontaneous substitution reaction.

At this time, the second metal may be selected in consideration of the first metal and the reducing power of the first metal. The second metal may be appropriately selected from among the types of metals that may be used as the shell part, taking into account the relationship thereof with the first metal. The spontaneous substitution reaction may be controlled in rate by adjusting the concentration of the second metal ion contained in the second electrolyte, and the thickness of the shell may also be controlled.

In the present disclosure, metal powder particles with core-shell structures of various shapes may be obtained through a spontaneous substitution reaction utilizing the difference in reducing power due to the natural potential difference of the metal. The metal powder particles thus obtained may be used to provide a porous coating layer on the surface of a substrate.

In detail, a negative electrode including a coating layer on the surface of a substrate, which may be a negative electrode current collector, may be provided by using multiple metal powder particles. The porous layer formed on the surface of the substrate by the metal powder particles may be a porous layer with developed pores, containing a large number of pores, due to the high surface area of the metal powder particles.

During the charging process of a battery including the porous layer provided above, the negative electrode may provide sufficient space for lithium deposition, and the negative electrode according to an embodiment of the present disclosure may suppress volumetric expansion of the battery. According to another embodiment, the negative electrode including the porous layer has developed pores, allowing for uniform deposition of lithium metal and suppressing the formation and growth of lithium dendrites in a rechargeable/dischargeable battery.

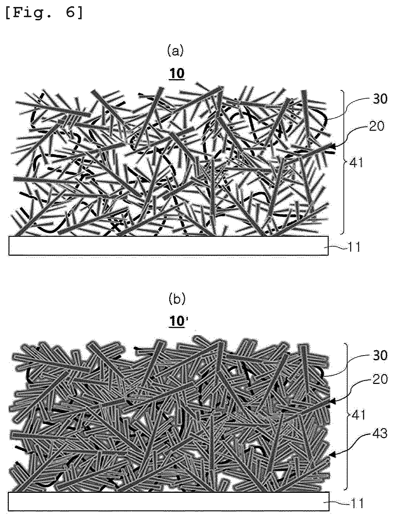

An example of a poro2us layer formed by the metal powder in the present disclosure is schematically illustrated in (a) of FIG. 6. (a) of FIG. 6 schematically illustrates a cross-section of a negative electrode (10) including a porous layer (41) formed using the dendrite-shaped metal powder particle (20) illustrated in (a) of FIG. 4. As illustrated in (a) of FIG. 6, the metal powder particles are arranged in a disordered manner, allowing the formation of a porous layer with developed pores. The pores within the porous layer may be interconnected to form a three-dimensional pore network.

As a porous layer with the three-dimensional pore network as described above on the substrate surface, lithium ions moving from the positive electrode during the charging process may migrate through the pores of the porous layer into the coating layer, allowing lithium metal to be electrodeposited within the pores.

(b) of FIG. 6 is a conceptual diagram of a charged negative electrode (10') including a porous layer (43) in a charged state, with lithium metal (13) electrodeposited within the pores of the porous layer of (a) of FIG. 6, by charging.

The porous layer formed by the metal powder as described above contains a large number of pores, providing a storage space for storing lithium metal and thereby preventing uneven electrodeposition of lithium during the charging process and enhancing electrochemical characteristics by increasing the contact surface area between lithium and the negative electrode current collector. In addition, since lithium is electrodepositioned within the porous layer, volume changes in the negative electrode due to lithium electrodeposition and desorption may be prevented, thereby maintaining the performance of the negative electrode and battery stability.

The porous layer according to the present disclosure may be a single layer or two or more multilayers. For example, as illustrated in (a) of FIG. 6, a single layer may be formed using metal powder. In addition, a multilayer may be formed using two or more types of metal powder particles having different particle shapes or sizes. For example, on the current collector side, a first metal powder particle with a small particle size may be used to form a first coating layer with small pores, and a second metal powder particle with a larger particle size than the first metal powder particle may be used on the first coating layer to form a second coating layer with larger pores.

In this case, the particle size of the metal powder may be determined by setting the outer boundary defined by the main branch and side branch of a single metal powder particle, as the particle boundary, and determining the particle size based on volume.

The porous layer may include a binder along with the metal powder. For example, the porous layer as above may be manufactured by mixing a metal powder having a high surface area with a binder in a solvent on the surface of a substrate serving as a negative electrode current collector, to form a paste, casting the paste onto the surface of the substrate, and drying the same.

The binder included in the above paste manufacturing is not particularly limited, and a binder commonly used in electrode manufacturing may also be appropriately used in the present disclosure. For example, the binder may include at least one selected from the group consisting of styrene-butadiene rubber, acrylated styrene-butadiene rubber, acrylonitrile-butadiene rubber, polybutadiene rubber (BR), acrylic rubber, butyl rubber, ethylene-propylene copolymer, polyepichlorohydrin, polyphosphazene, polyacrylonitrile, polystyrene, polyvinylpyridine, chlorosulfonated polyethylene, latex, polyester resin, acrylic resin, phenol resin, epoxy resin, polyvinyl alcohol resin, acrylate resin, polyaniline (PANI), polythiophene (PT), polyacetylene, polypyrrole (PPy), poly(3,4-ethylene dioxythiophene) (PEDOT), polyvinylidene fluoride (PVdF), Poly(vinylidene fluoride-co-hexafluoropropylene), carboxymethylcellulose (CMC), starch, hydroxypropylcellulose, polyvinylpyrrolidone, polytetrafluoroethylene (PTFE), polytetrafluoroethylene, polyethylene, polypropylene, ethylene-propylene-diene monomer (EPDM), polymethylmethacrylate, and fluororubber.

In an embodiment, the binder may be a styrene-butadiene rubber (SBR)-based binder, a carboxymethyl cellulose (CMC)-based binder, a polyacrylic acid-based binder, a poly(3,4-ethylenedioxythiophene, PEDOT)-based binder, or a fluorine-containing binder. In more detail, the binder may be a fluorine-containing binder, and for example, the fluorine-containing binder may be at least one selected from the group consisting of polyvinylidene fluoride (PVdF), polytetrafluoroethylene (PTFE), polytetrafluoroethylene, and fluororubber.

The binder is not particularly limited, but may be included in an amount of 1 to 30 wt% based on the solid content of the paste. If the binder content is less than 1 wt%, the adhesion of the porous layer may be reduced, and if exceeding 30 wt%, resistance may increase, resulting in a decrease in electrical conductivity and further deteriorating lithium deposition performance. In more detail, the binder content may be 1 wt% or more, 1.2 wt% or more, 1.5 wt% or more, 2 wt% or more, or 3 wt% or more, and may be 30 wt% or less, 25 wt% or less, 20 wt% or less, 15 wt% or less, or 12 wt% or less.

Meanwhile, the solvent is not particularly limited, and a solvent commonly used in electrode manufacturing may be suitably used in the present disclosure, and for example, may include at least one selected from the group consisting of water, acetone, formic acid, chloroform, isopropanol, N-methylpyrrolidone (NMP), Dimethylformamide (MF), dimethylacetamide (DMAc), dimethyl sulfoxide (DMSO), and Tetrahydrofuran (THF).

The solvent is not particularly limited, but may be included in the paste in a content of 30 to 60 wt%.

A method for applying the paste according to the present disclosure to the substrate surface is not particularly limited. A method such as bar coating, casting, spraying, doctor blading or the like, in detail, a wet coating method, may be used. The thickness of the porous layer may be easily controlled, for example, by adjusting the viscosity of the paste, the height of the doctor blade or the like.

In this case, the thickness of the porous layer may range, but is not limited thereto, from 0.5 to 100 µm. The porous layer functions to store lithium metal, and may thus be formed with a thickness that allows for the minimum storage of lithium metal. In this regard, the porous layer may be 0.5 µm or more, 1 µm or more, 1.5 µm or more, 2 µm or more, 3 µm or more, or 5 µm or more.

Meanwhile, if the porous layer is excessively thick, the transfer of lithium ions may not be smooth, which may reduce the effects obtained by including the porous layer or make it difficult to secure the effects. In another aspect, if the porous layer is excessively thick, it may result in a loss of energy density per volume and weight. In this regard, the porous layer of the present disclosure may be 100µm or less, or may be 90µm or less, 80um or less, 70µm or less, 60µm or less, or 50µm or less.

The porous layer obtained by the present disclosure may have a porosity of 30% or more, 95% or less, in detail, 50% or more, 70% or more, 80% or more, or 85% or more, as determined by XRM (X-ray Microscope) analysis before lithium metal electrodeposition or upon complete discharge, but is not limited thereto. Additionally, the porous layer according to the present disclosure may implement the high porosity described above by interconnecting pores to form a porous layer. The porous layer may have a closed porosity, which indicates the proportion of pores that are not interconnected, of 0.05% or less, 0.03% or less, 0.01% or less, or 0.0095% or less, before lithium metal electrodeposition or upon complete discharge. In detail, the negative electrode according to the present disclosure has highly developed porosity, with interconnected pores forming a three-dimensional pore network, thereby improving lithium ion insertion and de-insertion characteristics during charging and discharging.

In addition, the porous layer according to the present disclosure may have a high specific surface area of 300 m²/m³ or more upon complete discharge.

Meanwhile, the porous layer according to the present disclosure may include pores of various sizes, as the pores are formed by metal powder particles with a high surface area. For example, the porous layer according to the present disclosure may include pores ranging from nano-sized to meso-sized.

As described above, the porous layer formed on the negative electrode current collector may include pores of various sizes, and thus lithium metal may be electrodeposited within the pores.

For example, the porous layer may have a multilayer structure. For example, the porous layer may include a first layer positioned on the surface of the substrate serving as the negative electrode current collector and a second layer positioned on the outer surface of the porous layer. The metal powder particle contained in the first layer may have a smaller particle size than the metal powder particle contained in the second layer.

The metal powder particle in the porous layer positioned on the negative electrode current collector side has a smaller particle size, thereby forming smaller pores and thus increasing the uniformity of lithium electrodeposition within the porous layer, thereby enhancing electrodeposition efficiency and suppressing dendrite growth.

Although not limited thereto, the thickness of the first layer of the porous layer may be thicker than that of the second layer.

The negative electrode provided by the present disclosure includes a porous layer on the surface of a substrate serving as the negative electrode current collector, and lithium is electrodeposited within the pores of the porous layer, thereby improving electrodeposition density and extending battery lifespan.

In addition, the stable electrodeposition of lithium within the pores suppresses lithium dendrite formation, the contact area between the lithium metal and the current collector is improved, and the local current density of the negative electrode due to a high specific surface area thereof is reduced, thereby providing uniform electron distribution within the lithium electrode. Thus lithium dendrite formation and growth may be prevented during charge/discharge, thereby enhancing battery stability.

Furthermore, when using the current collector according to the present disclosure, sufficient space for lithium deposition during charge/discharge may be provided, thereby suppressing volumetric expansion of the battery.

### Mode for the Invention

Hereinafter, the present disclosure will be described in more detail with examples. However, the following examples are merely examples of the present disclosure and are not intended to limit the present disclosure.

### [Preparation of Metal Powder]

### Preparation Example 1

1.0 M sodium chloride and 0.2 M hydrogen chloride were added as reaction accelerators into the room-temperature electrolyte in which copper sulfate (CuSO₄) (concentration: 0.1 M) was dissociated. An aluminum plate (10 cm x 8 cm), which has a higher reducing power than that of the copper sulfate, was added to the electrolyte at room temperature, and the reaction was conducted for 20 minutes while generating hydrogen bubbles within the electrolyte, thereby generating copper powder within the electrolyte.

After recovering the generated copper powder, the recovered copper powder was added to an electrolyte (30wt% of Ag) containing AgNO₃ and maintained at room temperature for 20 minutes to induce a spontaneous substitution reaction, thereby forming a silver (Ag) coating layer on the surface of the copper powder. Thus, a metal powder particle of a core-shell structure consisting of a copper core part and a silver shell part was prepared.

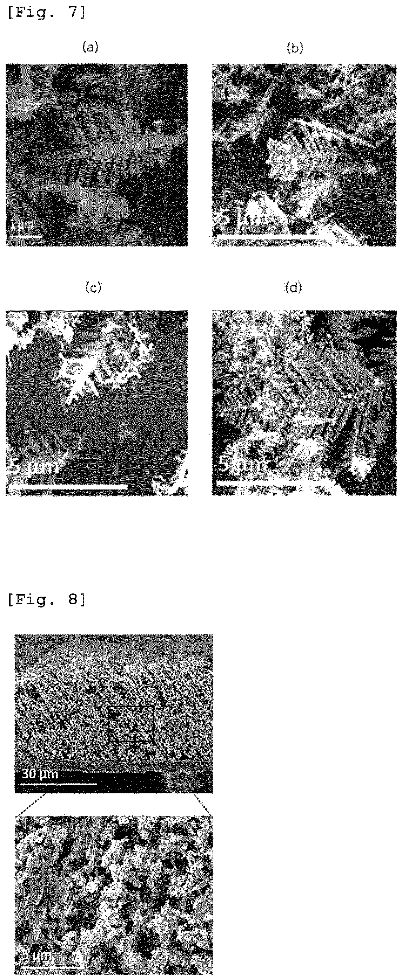

The prepared metal powder particle having the core-shell structure was imaged using an SEM, and the image is illustrated in (a) of FIG. 7. The size of the metal powder particle was also measured using a Field Emission Scanning Electron Microscopy (FESEM), and the results are illustrated in Table 1 below.

### Preparation Example 2

A metal powder particle having the core-shell structure was prepared using the same method as in Example 1, except that the reaction to generate copper powder in the electrolyte was performed for 30 minutes instead of 20 minutes.

The prepared metal powder particle having the core-shell structure was imaged using an SEM, and the image is illustrated in (b) of FIG. 7. In addition, the size of the metal powder particle was measured using an FESEM, and the results are illustrated in Table 1 below.

### Preparation Example 3

Copper powder was prepared using the same method as in Example 1, except that the reaction to generate copper powder in the electrolyte was performed for 40 minutes instead of 20 minutes.

The prepared metal powder particle having the core-shell structure was imaged using SEM, and the image is illustrated in (c) of FIG. 7. In addition, the size of the metal powder particle was measured using FESEM, and the results are illustrated in Table 1 below.

### Preparation Example 4

Copper powder was prepared using the same method as in Example 1, except that the reaction to generate copper powder in the electrolyte was performed for 60 minutes instead of 20 minutes.

The prepared metal powder particle having the core-shell structure was imaged using SEM, and the image is illustrated in (b) of FIG. 7. In addition, the size of the metal powder particle was measured using FESEM, and the results are illustrated in Table 1 below.

**[Table 1]**

| | Preparation Example 1 | Preparation Example 2 | Preparation Example 3 | Preparation Example 4 |
|---|---|---|---|---|
| Metal Powder Particle Size (µm) | 3.0 | 5.0 | 7.0 | 9.0 |

As can be seen from (a) to (d) of FIG. 7, the respective metal powder particles obtained in Preparation Examples 1 to 4 formed a shell part by coating silver on a core part of copper powder having a dendrite shape.

### [Manufacturing of Negative Electrode]

### Example 1

90 wt% of the core-shell dendritic metal powder particle obtained in Preparation Example 1 and 10 wt% of PVDF binder were added to an NMP solvent to prepare a paste. The paste had a solids content of 60 wt%.

The prepared paste was cast onto one surface of a copper current collector (4 µm thick) using a doctor blade method and dried to form a 48 µm-thick porous layer, thereby producing a negative electrode.

The porosity and closed pore ratio of the porous layer of the obtained negative electrode were measured by MIP (Mercury Intrusion Porosimetry) analysis and XRM analysis (X-ray microscope), and the results are illustrated in Table 2.

Furthermore, a cross-section of the prepared negative electrode was imaged, and the photograph is illustrated in (a) of FIG. 8. In addition, a portion of the image is enlarged and illustrated in (b) of FIG. 8.

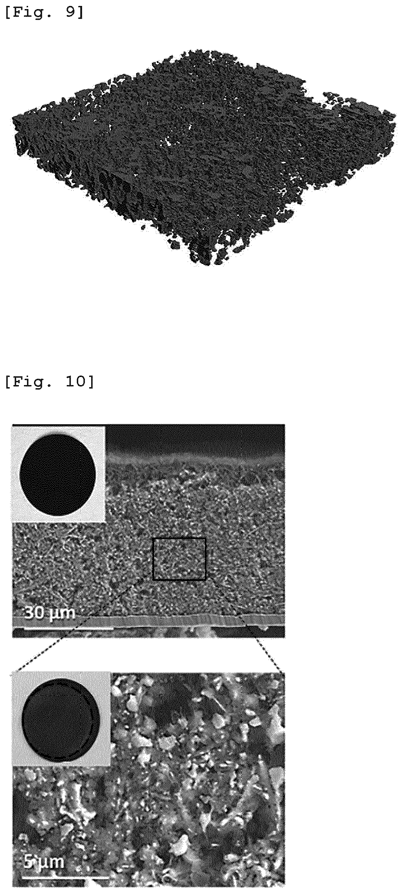

Furthermore, the pore distribution of the obtained porous layer was imaged in 3D, and this is illustrated in FIG. 9. In detail, as a device including an X-ray source for the negative electrode on which the porous layer was formed, a detector, and a lens capable of magnifying the source between the detectors, an X-ray microscope of Zeiss's Xraida 520 Versa was used to obtain a 3D stereoscopic structure of the pores, and a 3D image of the internal pore structure of the negative electrode mixture layer was obtained by 3D rendering from the image of the obtained 3D stereoscopic structure using software GEODICT.

### Examples 2 to 4

Negative electrodes were manufactured using the same method as in Example 1, except that the respective metal powder particles obtained in Preparation Examples 2 to 4 were used.

Also the pore characteristics of the porous layers of the negative electrodes obtained in respective examples were analyzed, and the results are illustrated in Table 2.

**[Table 2]**

| | Example 1 | Example 2 | Example 3 | Example 4 |
|---|---|---|---|---|
| Porosity (%) | 95% | 85% | 86% | 91% |
| Closed Pore Ratio (%) | 0.006 | 0.0093 | 0.0081 | 0.0075 |

As can be seen from Table 2, it can be seen that the negative electrodes manufactured in examples exhibited highly developed porosity with a porosity of 85% or more, and a closed porosity ratio of less than 0.01%, indicating that the pores were open and interconnected, forming a three-dimensional pore network. As can be seen in (a) of FIG. 8 and (b) of FIG. 8 that is an enlarged portion thereof, provided by imaging a cross-section of the negative electrode with the porous layer of Example 1, dendrite-shaped metal powder particles aggregated to form a porous layer on the surface of the copper current collector, and furthermore, the porous layer visually demonstrated the development of pores between the metal powder particles. Furthermore, from FIG. 9, which depicts an image of the internal pore structure of the porous layer, it was confirmed that the porous layer obtained in Example 1 as above had developed internal pores that were interconnected to form a three-dimensional pore network.

### Comparative Example 1

The copper current collector used to form the coating layer in Example 1 was used as a negative electrode current collector without forming a separate coating layer.

### Comparative Example 2

A paste containing carbon powder (particle size: 40 nm, specific surface area: 62 m²/g, powder density: 0.16 g/cm³, trade name: Supe-P Li by Timcal) was cast onto the same copper current collector as in Example 1 to produce a negative electrode with a carbon coating layer.

The example was performed in the same method as in Example 1, except that the paste was prepared using carbon powder (powder density: 0.16g/cm³) instead of the dendritic metal powder particle in Example. This resulted in a carbon coating layer with a mixture density of 1.4 g/cc formed on the copper current collector.

Porosity was measured using the true density of the carbon powder, and the porosity was less than 30% based on the true density (2.0 g/cc) of amorphous carbon.

### Comparative Example 3

A negative electrode with a 100 nm silver coating layer was manufactured on the same copper current collector as in Example 1 by sputter coating.

### [Battery Manufacturing and Battery Characteristics Evaluation]

### - Negative Electrodes of Example 1 and Comparative Examples 1 to 3 -

Coin-type full-cell batteries were fabricated using the negative electrodes manufactured in Example 1 and Comparative Examples 1 to 3, each containing the positive electrode in which NCM 622 (3 mAh/cm²) as the positive electrode active material, and a carbonate-based electrolyte (N/P ratio = 2.3).

First, the batteries using the negative electrodes manufactured in Example 1, and Comparative Examples 1 and 2, were charged, and the charged negative electrodes were disassembled and the cross-sections thereof were observed.

A cross-section of the charged negative electrode manufactured in Example 1 is illustrated in (a) of FIG. 10, and a magnified portion of the image is illustrated in (b) thereof.

As can be seen from (a) and (b) of FIG. 10, lithium was electrodeposited within the pores of the porous layer formed on the surface of the negative electrode current collector. Even with this type of charging, the negative electrode was found to have lithium ions electrodeposited within the pores of the porous coating layer, and no change in the thickness of the negative electrode occurred as compared to (a) of FIG. 8, and it could be confirmed that the volumetric expansion of the negative electrode due to charging and discharging was suppressed.

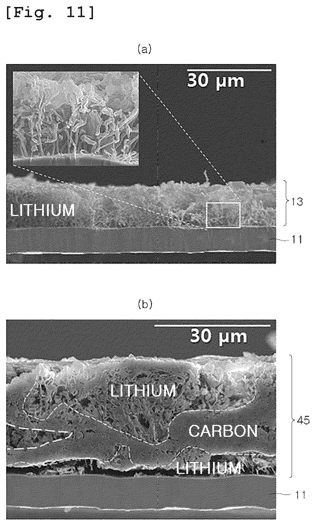

Meanwhile, a cross-section of the negative electrode using the flat copper current collector manufactured in Comparative Example 1 was imaged and is illustrated in (a) of FIG. 11. As can be seen from (a) of FIG. 11, lithium metal was electrodepositioned on the surface of the copper current collector (11), forming a lithium metal layer (13). The formation of this lithium metal layer causes the negative electrode to expand in volume, potentially leading to battery volumetric expansion issues during charging and discharging.

In addition, a cross-section of the negative electrode with a carbon coating layer on the flat copper current collector manufactured in Comparative Example 2 was imaged and is illustrated in (b) of FIG. 11. As can be seen from (b) of FIG. 11, it was found that a lithium layer was formed by electrodeposition of lithium metal on the surface of the carbon coating layer (45) formed on the copper current collector (11). Depending on the surface shape of the carbon coating layer, the problem of volumetric expansion due to electrodeposition of lithium was reduced compared to the negative electrode of Comparative Example 1, but the problem of volumetric expansion of the battery due to charging and discharging still existed because lithium electrodeposition existed on the surface of carbon located on the outermost surface of the negative electrode.

Although the negative electrode of Comparative Example 3 was not shown separately, it was found that the negative electrode of Comparative Example 3 also had the same planar surface as in Comparative Example 1 and could provide a result of improving the lithium electrodeposition density by having a silver coating layer, but there was a problem of volumetric expansion of the negative electrode during the charge and discharge process.

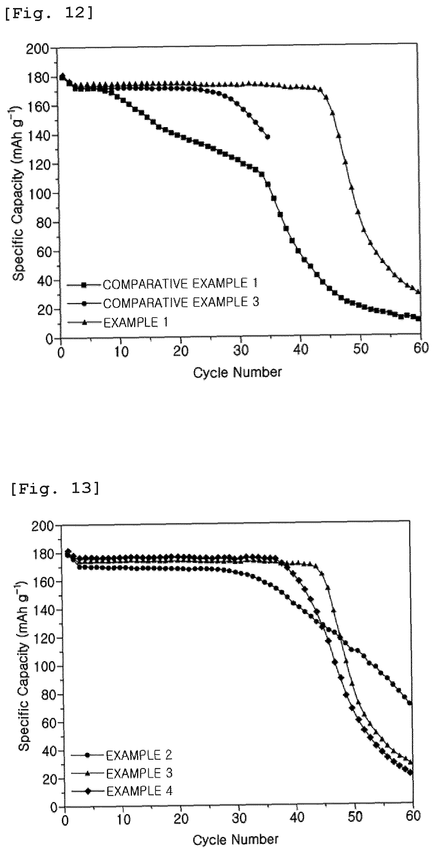

Meanwhile, the batteries using the negative electrodes of Example 1, and Comparative Examples 1 and 3, were charged and discharged under the conditions of 0.2C charging and 0.3C discharging, to evaluate the lifespan characteristics thereof. The evaluation results are illustrated in FIG. 12.

As can be seen from FIG. 12, the battery containing the negative electrode according to Example 1 maintained a constant capacity with little change up to approximately 45 cycles of operation. However, Battery 2 containing the negative electrode of Comparative Example 1 exhibited a gradual capacity decrease before reaching 10 cycles, and Battery 3 containing the negative electrode of Comparative Example 3 exhibited a capacity decrease starting from approximately 25 cycles.

### - Negative Electrodes of Examples 2 to 4 -

Batteries were manufactured using the same method as that of Battery 1 using the negative electrode of Example 1, except that the negative electrodes manufactured in Examples 2 to 4 were respectively used.

The manufactured batteries were respectively charged and discharged under the conditions of 0.2C charging and 0.3C dis charging, to evaluate lifespan characteristics thereof. The evaluation results are illustrated in FIG. 13.

As can be seen from FIG. 13, all of the respective batteries including the negative electrodes of Examples 2 to 4 maintained a constant capacity with almost no change until approximately 30 cycles of operation, and the battery including the negative electrode of Example 4 showed excellent results in which the capacity was maintained constant without change until 45 cycles.

### [DESCRIPTION OF REFERENCE CHARACTERS]

- 10:: NEGATIVE ELECTRODE
- 10':: CHARGED NEGATIVE ELECTRODE
- 11:: NEGATIVE ELECTRODE CURRENT COLLECTOR
- 13:: LITHIUM METAL
- 20:: METAL POWDER
- 22:: MAIN BRANCH
- 24:: SIDE BRANCH
- 26:: THROUGH-HOLE
- 32:: CORE PART
- 34:: SHELL PART
- 30:: BINDER
- 41:: POROUS LAYER
- 43:: CHARGED POROUS LAYER
- P, P0, P1, P2, P3, PN:: INFLECTION POINT
- α:: INCLUDED ANGLE

## Claims

1. A negative electrode for a lithium metal battery, comprising:
a substrate and a porous layer on the substrate,
wherein the porous layer includes a plurality of metal powder particles, and
the metal powder particles have a core part and a shell part formed on at least a portion of a surface of the core part.

2. The negative electrode for a lithium metal battery of claim 1, wherein the shell part includes at least one lithiophilic metal selected from the group consisting of Si, Zn, Ti, Au, Ag, Pt, Mg, Sn, In, and Bi.

3. The negative electrode for a lithium metal battery of claim 1, wherein the shell part has a thickness of 1 nm to 1 µm.

4. The negative electrode for a lithium metal battery of claim 1, wherein the metal powder particles have an aspect ratio of greater than 1 and less than or equal to 100.

5. The negative electrode for a lithium metal battery of claim 4, wherein the metal powder particles have a major axis length of 1 to 100 µm.

6. The negative electrode for a lithium metal battery of claim 1, wherein the metal powder particles are rod-shaped particles having at least one inflection point at which a direction of extension from one end to the other end changes.

7. The negative electrode for a lithium metal battery of claim 6, wherein the metal powder particles have a bending angle β of 5° or more and 90° or less, changing in the direction of extension at the inflection point.

8. The negative electrode for a lithium metal battery of claim 1, wherein the metal powder particles include at least one through-hole internally, wherein the through-hole has at least one end open to the outside.

9. The negative electrode for a lithium metal battery of claim 1, wherein the metal powder particles have two or more branches.

10. The negative electrode for a lithium metal battery of claim 1, wherein the metal powder particles have a main branch and at least one side branch connected to the main branch.

11. The negative electrode for a lithium metal battery of claim 1, wherein the metal powder particles include a core part of a first metal and a shell part of a second metal, wherein the first metal has a higher reducing power than the second metal.

12. The negative electrode for a lithium metal battery of claim 11, wherein the first metal includes at least one metal selected from the group consisting of Cu, Si, Ge, Zn, Ti, Au, Ag, Pt, Mg, Sn, Al, In, Pb, Bi, Sb, Ni, Mn, Fe, Co, Cr, W, and Ru, an oxide of the metal, or an alloy of the metal.

13. The negative electrode for a lithium metal battery of claim 11, wherein the second metal includes at least one metal selected from the group consisting of Si, Zn, Ti, Au, Ag, Pt, Mg, Sn, In, and Bi, an oxide of the metal, or an alloy of the metal.

14. The negative electrode for a lithium metal battery of claim 1, wherein the porous layer has a thickness of 0.5 to 100 µm.

15. The negative electrode for a lithium metal battery of claim 1, wherein the porous layer further includes a fluorine-containing binder.

16. The negative electrode of claim 15, wherein the binder is a fluorine-containing binder.

17. The negative electrode for a lithium metal battery of claim 16, wherein the binder includes at least one selected from the group consisting of polyvinylidene fluoride (PVdF), polytetrafluoroethylene (PTFE), polytetrafluoroethylene, and fluororubber.

18. The negative electrode for a lithium metal battery of claim 1, wherein the porous layer includes a first layer on a substrate surface side and a second layer that is an outer surface side of the porous layer,
wherein a metal powder in the first layer has a smaller particle size than a metal powder in the second layer.

19. The negative electrode for a lithium metal battery of claim 1, wherein lithium metal is electrodeposited within pores of the porous layer.

20. The negative electrode for a lithium metal battery of claim 1, wherein the substrate is a current collector.
